# EUROPÄISCHE PATENTSCHRIFT

(11) **EP 0 196 102 B1**
(45) Veröffentlichungstag und Bekanntmachung des Hinweises auf die Patenterteilung: **24.03.1993**
(21) Anmeldenummer: 86104260.4
(22) Anmeldetag: 27.03.1986
(51) Int. Cl.: G02B 6/38, G02B 6/44

(54) **Gestell zur Befestigung von Glasfaser-Steckverbindungen**
Support for mounting glass fibre connectors
Support pour la fixation des connecteurs à fibres de verre

(30) Priorität: 29.03.1985 DE 3511653
(43) Veröffentlichungstag der Anmeldung: 01.10.1986
(73) Patentinhaber: SIEMENS AKTIENGESELLSCHAFT, 80333 München (DE)
(72) Erfinder: Füller, Johann, D-8206 Oberholzham bei Bruckmühl (DE); Rutzmoser, Hermann, D-8000 München 90 (DE)

(56) Entgegenhaltungen:
- EP-A- 0 105 597
- DE-B- 2 741 585
- PATENT ABSTRACTS OF JAPAN, Band 8, Nr. 219 (P-306)[1656], 5. Oktober 1984; & JP-A-59 102 208

## Beschreibung

Die Erfindung bezieht sich auf ein Gestell zur Befestigung von Glasfaser-Steckverbindungen innerhalb eines Kupplungsfeldes, wobei das Gestell im wesentlichen aus Rahmenteilen, zwischen denen etwa mittig eine Montagewand angeordnet ist, die eine ebene Montagefläche aufweist, und aus auf der Montagefläche angeordneten Halteeinrichtungen, die jeweils eine Klemmvorrichtung für eine zusammengesteckte Glasfaser-Steckverbindung aufweisen, besteht.

Ein derartiges Gestell ist z. B. aus EP-A-105 597 bekannt. Bei derartigen Gestellen besteht die Forderung nach einer guten Zugänglichkeit der einzelnen Steckverbindungen bei gleichzeitig hoher Packungsdichte dieser Steckverbindungen. Diese Forderung wird bei dem bekannten Gestell nicht optimal erfüllt.

Aufgabe der vorliegenden Erfindung ist es, ein Gestell der eingangs genannten Art anzugeben, welches die oben beschriebenen Anforderungen erfüllt. Diese Aufgabe wird bei einem Gestell der obengenannten Art gemäß der Erfindung durch die im Kennzeichen des Anspruchs 1 genannten Merkmale gelöst.

Weitere vorteilhafte Ausgestaltungen des Erfindungsgegenstandes finden sich in den Unteransprüchen.

Nachstehend wird die Erfindung mir ihren Vorteilen anhand der in den Figuren dargestellten Ausführungsbeispiele näher erläutert.

Die Figuren zeigen im einzelnen:

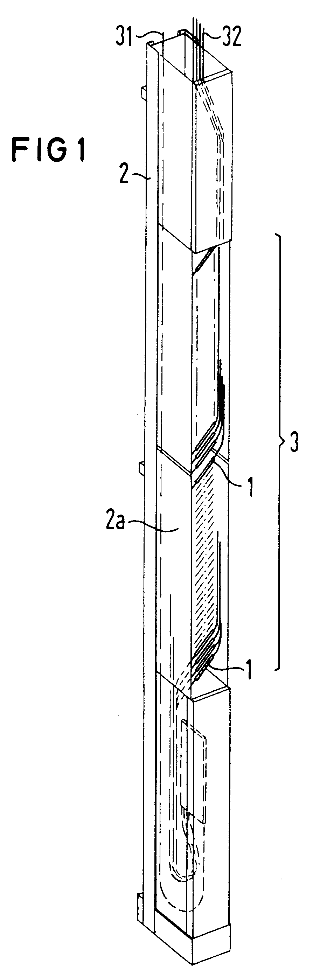

- Figur 1: ein Glasfaserkabelendgestell mit inliegendem Kupplungsfeld,
- Figur 2: Einzelheiten des Kupplungsfeldes mit klemmbaren Steckverbindern,
- Figuren 3 und 4: die Klemmvorrichtungen im einzelnen,
- Figuren 5 und 6: das Zusammenfügen der Klemmvorrichtungen.

Die Unterbringung der Glasfaser-Steckverbinder 1 im Glasfaserkabelendgestell 2 erfolgt im sogenannten Kupplungsfeld 3, das aus zwei Gestelleinsätzen 2a besteht. Aufgrund des begrenzten Einbauraumes im Schmalgestell der Bauweise 7R muß ein sehr kleiner Teilungsabstand für die vertikale Anordnung der Glasfaser-Steckverbinder 1 eingehalten werden. Andererseits erfordert die Form der Glasfaser-Steckverbinder 1 mit drei verschraubten Komponenten 4, 5 und 6 ausreichenden Bedienraum. (Derartige Steckverbinder sind an sich zum Beispiel durch die DE-AS Nummer 27 41 585 und DIN 47 295/7 bekannt). Die Haltevorrichtung 7 für jede Steckverbindung ist deshalb nach vorne heausziehbar angeordnet.

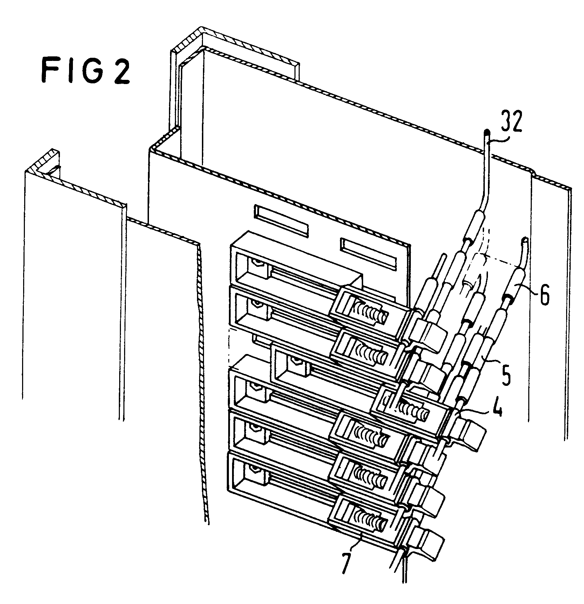

In Figur 2 ist eine derartige Anordnung dargestellt. Wegen Platzersparnis und zur Einhaltung zulässiger Biegeradien für die Glasfaserkabel 31/32 sind die Steckverbindungen im Gestell schräg, zum Beispiel um 45° gegen die Vertikale geneigt angeordnet. Eine der Haltevorrichtungen ist im herausgezogenen Zustand dargestellt.

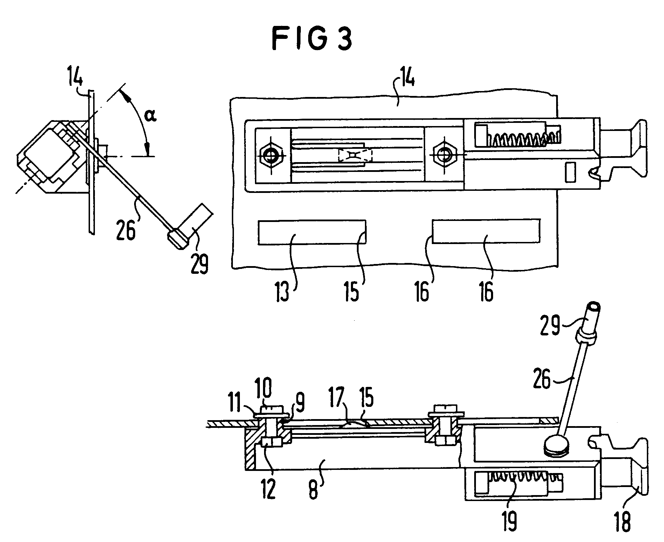

Ein vorzugsweise als Kunststoffspritzteil ausgeführtes Schiebestück 7 ist über Zapfen 9, Schrauben 10, Scheiben 11 undMuttern 12 in Schlitzen 13 einer Montagewand 14 bis zu einem vorderen und hinteren Anschlag geführt (Figur 3). Die Endlagen werden über eine federnd hinter die als Anschläge dienenden Kanten 15, 16 der Langlöcher 13 einschnappende Rastnase 17 fixiert. Das Schiebestück bildet im vorderen Bereich zusammen mit dem Druckstück 18 und der Druckfeder 19 die eigentliche Halterung 8 für den Steckverbinder. Hierzu wird der kabelseitig angebrachte Steckerstift 4 über ein bewegliches U-förmiges Druckstück 18 mit Griffleiste in eine Ausnehmung 20 der Halterung 8 geklemmt. Dieses vorzugsweise an das Schiebestück angegossene Halteteil ist zur günstigeren Kabelführung im Gestell gegenüber der Befestigungswand 14 um den Winkel α∼45° gedreht.

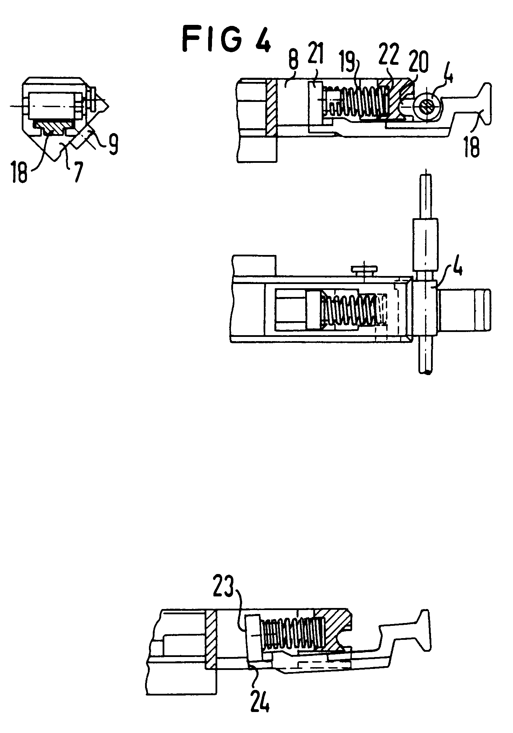

Das Halteteil 8 ist in Figur 4 gesondert dargestellt. Die Klemmkraft wird von der zwischen einem Ansatz 21 des Druckstücks 18 und einer Anlage 22 der Halterung 8 eingespannten Druckfeder 19 erzeugt. Zur weiteren Bedienungserleichterung wird das Druckstück 18 im herausgezogenen Zustand durch Kippen mit seinem rückseitigen Ansatz 23 in eine Kante 24 der Durchbrechung 24 eingerastet. (Unterste Darstellung in der Figur 4). In dieser Stellung ist ein ausreichender Spalt für das Einlegen der Steckerstifte 4 garantiert. Es können Steckerstifte mit unterschiedlichen Außenkonturen gehalten werden. Durch kurzes Ziehen wird die Rastung aufgehoben und das Druckstück gleitet in die Klemmstellung zurück.

Beim Herausziehen des Schiebestückes 7 aus der hinteren Endlage im Getell ist die Klemmwirkung der Halterung 8 durch die gegenüber dem Widerstand der Rastnase 17 größere Kraft der Druckfeder 19, sichergestellt.

Das Montieren der Steckverbindung 1 kann in vorteilhafter Weise völlig frei erfolgen und erst danach kann sie in die Halterung 8 wie beschrieben eingeklemmt werden.

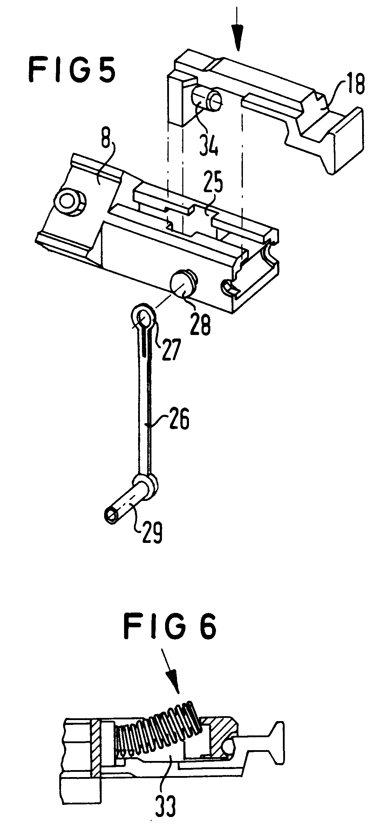

Für das Zusammenfügen des Schiebestücks 8 und des Druckstücks 18 gemäß Darstellung in Figur 5 und 6 werden keine zusätzlichen Verbindungselemente benötigt. Die Bemessung der Feder samt Federkammer 33 mit Aufnahmedorn 34 ist so getroffen, daß das über die Öffnung 25 in das Schiebestück 8 eingelegte Druckstück 18 nach dem Eindrücken der Druck-Feder 19 nur noch in die Einlegestellung des Steckerstifts 4 vorgezogen werden kann. Damit ist das Schiebestück, weil sich die Feder nicht weiter zusammendrücken läßt, gegen herausfallen gesichert.

Zum Schutz des Steckerstiftes im Leerzustand vor dem Koppeln des Steckverbinders mit Kupplung 5 und Steckerstift der Geräteseite 6, ist eine Schutzkappe 29 mittels Band 26 und Öse 27 an einem pilzförmigen Ansatz 28 unverlierbar befestigt.

## Patentansprüche

1. Gestell zur Befestigung von Glasfaser-Steckverbindungen (1) innerhalb eines Kupplungsfeldes, wobei das Gestell im wesentlichen aus Rahmenteilen, zwischen denen etwa mittig eine Montagewand angeordnet ist, die eine ebene Montagefläche aufweist, und aus auf der Montagefläche angeordneten Halteeinrichtungen (7), die jeweils eine Klemmvorrichtung (18, 19, 20, 21) für eine zusammengesteckte Glasfaser-Steckverbindung (1) aufweisen, besteht,
**dadurch gekennzeichnet,**
daß jede der Halteeinrichtungen (7) ein Schiebestück (8) besitzt, das in Führungseinrichtungen auf der Montagefläche verschiebbar befestigt ist, so daß die Halteeinrichtung zu einem Randbereich der Montagefläche hin ausziehbar ist, und daß die Schiebestücke (8) der Halteeinrichtungen (7) als Klemmvorrichtungen (18, 19, 20, 21) ausgebildet sind, die zum besagten Randbereich hin über die Montagefläche überstehen und zum Umgreifen des Steckverbinders in einem zangenförmigen Teil (18) enden, der gegen die Montagefläche derart geneigt ist, daß die umgriffenen Steckverbinder unter einem Winkel von etwa 45° zur Montagefläche in einer Ebene senkrecht zur Montagefläche gehalten werden.

2. Gestell nach Anspruch 1,
**dadurch gekennzeichnet,**
daß die Schiebestücke (8) an der Montagefläche (14) in horizontalen Schlitzen (13) schiebbar und rastbar (17) befestigt sind.

3. Gestell nach Anspruch 2,
**dadurch gekennzeichnet,**
daß die Klemmvorrichtung (18, 19, 20, 21) aus einem U-förmigen Druckstück (18) besteht, das axial durch eine Druckfeder (19) unter Zwischenlage eines Steckerteils (4) gegen einen Anschlag (20) an der Frontseite des Schiebestücks (8) verspannbar ist und daß der hintere Schenkel (21) des Druckstücks (18) über eine Durchbrechung (25) in eine Kammer (33) des Schiebestücks (8) einsteckbar ist, in die die Feder (19) im eingeschobenen Zustand des Druckstücks (18) auf einen Dorn des Schenkels (21) aufschiebbar und in eine frontseitige Ausnehmung der Federkammer (33) bis zu deren Grundanschlag (22) eindrückbar ist.

4. Gestell nach Anspruch 3,
**dadurch gekennzeichnet,**
daß das Druckstück (18) duch Verkanten gegen die Axiallage mit der rückseitigen Kante (23) seines hinteren Schenkels (21) gegen die hintere Kante (24) der Durchbrechung (25) rastbar ist.

5. Gestell nach Anspruch 4,
**dadurch gekennzeichnet,**
daß die Federkammer (33), die Druckfeder (19) und das Druckstück (18) so dimensioniert sind, daß beim Öffnen der Klemmverbindung im eingelegten Zustand der Druckfeder (19) ein völliges Ausrasten des Druckstückes (18) aus der Durchbrechung (25) vermieden ist.

6. Gestell nach einem der vorhergehenden Ansprüche,
**dadurch gekennzeichnet,**
daß die Druckkraft der Druckfeder (19) größer bemessen ist als die Klemmkraft der Rastnase (17).

## Claims

1. Frame for mounting glass fibre connectors (1) inside a coupler panel, the frame essentially comprising frame parts, between which there is arranged approximately centrally a mounting wall which has a planar mounting surface, and retaining devices (7) which are arranged on the mounting surface and in each case have a clamping device (18, 19, 20, 21) for an intermated glass fibre connector (1), characterised in that each of the retaining devices (7) has a sliding part (8) which is displaceably mounted in guide devices on the mounting surface, so that the retaining device can be withdrawn towards an edge region of the mounting surface, and in that the sliding parts (8) of the retaining devices (7) are constructed as clamping devices (18, 19, 20, 21) which project over the mounting surface towards the said edge region and for the purpose of gripping the connector terminate in a tongue-shaped part (18) which is inclined with respect to the mounting surface in such a way that the gripped connector is retained at an angle of approximately 45° to the mounting surface in a plane perpendicular to the mounting surface.

2. Frame according to Claim 1, characterised in that the sliding part (8) is mounted slidably and latchably (17) in horizontal slots (13) on the mounting surface (14).

3. Frame according to Claim 2, characterised in that the clamping device (18, 19, 20, 21) comprises a U-shaped thrust piece (18) which can be axially braced by means of a compression spring (19) with the interposition of a plug part (4) against a stop (20) on the front of the sliding piece (8), and in that the rear limb (21) of a thrust piece (18) can be inserted via a through hole (25) into a chamber (33) of the sliding piece (8), in which in the pushed-in state of the thrust piece (18) the spring (19) can be pushed onto a mandrel of the limb (21) and can be pressed into a frontal recess of the spring chamber (33) up to the base stop (22) thereof.

4. Frame according to Claim 3, characterised in that by tilting with respect to the axial position, the thrust piece (18) can be latched with the rear edge (23) of its rear limb (21) against the rear edge (24) of the through hole (25).

5. Frame according to Claim 4, characterised in that the spring chamber (33), the compression spring (19) and the thrust piece (18) are dimensioned so that complete unlatching of the thrust piece (18) from the through hole (25) is prevented upon opening the clamped connection in the inserted state of the compression spring (19).

6. Frame according to one of the preceding claims, characterised in that the compressive force of the compression spring (19) is dimensioned to be larger than the clamping force of the latching lug (17).

## Revendications

1. Châssis pour fixer des connecteurs (1) pour fibres de verre à l'intérieur d'un champ de couplage, le châssis étant constitué essentiellement par des éléments de cadre, entre lesquels est disposée d'une manière approximativement centrée une paroi de montage qui possède une surface plane de montage, et par des dispositifs de retenue (7), qui sont disposés sur la surface de montage et qui possèdent chacun un dispositif de serrage (18,19,20,21) pour un connecteur enfiché (1) d'une fibre de verre,
caractérisé par le fait
que chacun des dispositifs de retenue (7) possède un coulisseau (8), qui est fixé de manière à être déplaçable dans des dispositifs de guidage sur la surface de montage de telle sorte que le dispositif de retenue peut être ressorti en direction d'une zone marginale de la surface de montage, et que les coulisseaux (8) des dispositifs de retenue (7) sont réalisés sous la forme de dispositifs de serrage (18,19,20,21), qui font saillie au-dessus de la surface de montage en direction de ladite zone marginale et se terminent, de manière à s'engager autour du connecteur, par une partie en forme de pince (18), qui est inclinée par rapport à la surface de montage de telle sorte que les connecteurs enserrés sont retenus sous un angle d'environ 45° par rapport à la surface de montage, dans un plan perpendiculaire à cette surface.

2. Châssis suivant la revendication 1, caractérisé par le fait que les coulisseaux (8) sont fixés sur la surface de montage (14) de manière à être déplaçables dans des fentes horizontales (13) et être encliquetables (17).

3. Châssis suivant la revendication 2, caractérisé par le fait que le dispositif de serrage (18,19,20,21) est constitué par un élément de serrage (18) en forme de U, qui peut être serré axialement au moyen d'un ressort de pression (19) moyennant l'interposition d'une partie (4) du connecteur, contre une butée (20) sur la face avant du coulisseau (8), et que la branche arrière (21) de l'élément de serrage (18) peut être enfichée, à travers un passage (25), dans une chambre (33) du coulisseau (8), dans laquelle, lorsque l'élément de serrage (18) est dans son état inséré, le ressort (19) peut être engagé sur une broche de la branche (21) et peut être repoussé dans un logement frontal de la chambre de ressort (33), jusqu'à sa butée de base (22).

4. Châssis suivant la revendication 3, caractérisé par le fait que l'élément de serrage (18) peut être encliqueté, par son inclinaison par rapport à la position axiale, au moyen du bord arrière (23) de sa branche arrière (21) contre le bord arrière (24) du passage (25).

5. Châssis suivant la revendication 4, caractérisé par le fait que la chambre (33) du ressort, le ressort de pression (19) et l'élément de serrage (18) sont dimensionnés de manière à éviter, lors de la suppression de la liaison avec serrage, et alors que le ressort de pression (19) est à l'état inséré, un désencliquetage complet de l'élément de serrage (18) hors du passage (25).

6. Châssis suivant l'une des revendications précédentes, caractérisé par le fait que la force de serrage du ressort de pression (19) est dimensionnée de manière à être supérieure à la force de serrage du bec d'encliquetage (17).
